# EUROPEAN PATENT APPLICATION

(11) **EP 3 029 817 A1**
(43) Date of publication of application: **08.06.2016**
(21) Application number: 14831800.9
(22) Date of filing: 30.07.2014
(51) Int. Cl.: H02K 29/00, H02K 1/22, H02K 3/18, H02K 21/12, H02P 6/16

(54) **MOTOR, MOTOR SYSTEM, AND MOTOR MECHANICAL ANGLE DETECTION METHOD**

(30) Priority: 30.07.2013 JP 2013158118
(71) Applicant: Kabushiki Kaisha Yaskawa Denki, Kitakyushu-shi, Fukuoka 806-0004 (JP); Kwo, Yong-Cheol, Seoul (KR); Sul, Seung-ki, Seoul (KR)
(72) Inventor: KWON, Yong-Cheol, Seoul (KR); SUL, Seung-Ki, Seoul (KR); MORIMOTO, Shinya, Kitakyushu-shi Fukuoka 806-0004 (JP); MURAKAMI, Sohji, Kitakyushu-shi Fukuoka 806-0004 (JP); BALOCH, Noor Aamir, Kitakyushu-shi Fukuoka 806-0004 (JP); OHTO, Motomichi, Kitakyushu-shi Fukuoka 806-0004 (JP)
(74) Representative: Grünecker Patent- und Rechtsanwälte PartG mbB
(86) International application number: PCT/JP2014/070075
(87) International publication number: WO 2015/016265

(57) **Abstract**

A motor includes a stator and a rotor that is arranged opposite to the stator through a predetermined air gap. The stator is such that a plurality of coils are wound around respective slots for each of a plurality of phases. In the stator, the number of turns of one of the plurality of coils is different from those of the others for each of the phases. In the rotor, among a plurality of magnetic poles formed of a plurality of permanent magnets arranged in a circumferential direction of a core, a magnetoresistance of at least one magnetic pole is different from those of the others.

## Description

### Field

Embodiments discussed herein relate to a motor, a motor system, and a detection method of a mechanical angle of the motor.

### Background

A position of a rotor is detected to control rotation of a motor. Conventionally, a position detector such as an encoder has generally been used to detect a rotational position of the rotor of the motor. However, a technique for detecting a position of a rotor without using an encoder has been sought from the viewpoints of wire saving, space saving, and improvement of reliability in a harsh environment.

As an example, such a technique is implemented by utilizing a value corresponding to a change of magnetoresistance of a magnetic pole attached to a rotary shaft, in which the change of the magnetoresistance is caused by a change of inductance of a coil winding at a stator side due to a change of a rotational position (a position depending on a displacement of a mechanical angle) of a rotor (see, for example, Patent Literature 1).

### Citation List

### Patent Literature

Patent Literature 1: Japanese Laid-Open Patent Publication No. 2010-166711

### Summary

### Technical Problem

However, the above-mentioned technique of Patent Literature 1 could merely have estimated, at the best, a relative mechanical angle only through an electrical angle. That is, the conventional technique that includes Patent Literature 1 could not directly have estimated an absolute mechanical angle that indicates an absolute position of a rotor.

An aspect of embodiments has been achieved in view of the above and its object is to provide a motor, a motor system, and a detection method of a mechanical angle of the motor that are capable of estimating an absolute mechanical angle of a rotor.

### Solution to Problem

According to an embodiment, a motor includes: a stator in which a plurality of coils are wound around respective slots for each of a plurality of phases, a number of turns of one of the plurality of coils being different from those of others for each of the phases; and a rotor that is arranged opposite to the stator through a predetermined air gap, among a plurality of magnetic poles formed of a plurality of permanent magnets arranged in a circumferential direction of a core, a magnetoresistance of at least one magnetic pole being different from those of others.

### Advantageous Effects of Invention

According to an aspect of embodiments, it is possible to accurately estimate a rotational position of a rotor without using an encoder.

### Brief Description of Drawings

FIG. 1 is a block diagram illustrating a general configuration of a motor system according to an embodiment.
FIG. 2 is a longitudinal sectional view illustrating a motor that is included in the above-mentioned motor system.
FIG. 3 is a transverse sectional view illustrating a motor according to a first embodiment.
FIG. 4 is a graph that is an example of base data for detecting a mechanical angle, the graph illustrating current amplitude with respect to high-frequency voltage application at a position of each phase of a motor.
FIG. 5 is a diagram illustrating exemplary steps of a detection method of a mechanical angle of the above-mentioned motor.
FIG. 6A is a diagram illustrating an exemplary first-half steps of the detection method of the mechanical angle of the above-mentioned motor.
FIG. 6B is a diagram illustrating an exemplary second-half steps of the detection method of the mechanical angle of the above-mentioned motor.
FIG. 7A is a diagram illustrating movement of a rotor of the above-mentioned motor.
FIG. 7B is a diagram illustrating movement of the rotor of the above-mentioned motor.
FIG. 7C is a diagram illustrating movement of the rotor of the above-mentioned motor.
FIG. 8 is a transverse sectional view illustrating a motor according to a second embodiment.
FIG. 9 is a transverse sectional view illustrating a motor according to a third embodiment.
FIG. 10A is a diagram illustrating an exemplary first-half steps of a detection method of a mechanical angle of the above-mentioned motor.
FIG. 10B is a diagram illustrating an exemplary second-half steps of the detection method of the mechanical angle of the above-mentioned motor.
FIG. 11 is a graph that is an example of base data for detecting the mechanical angle, the graph illustrating a value of electric current with respect to the mechanical angle of the motor for each phase.
FIG. 12A is a diagram illustrating movement of a rotor of the above-mentioned motor.
FIG. 12B is a diagram illustrating movement of the rotor of the above-mentioned motor.
FIG. 12C is a diagram illustrating movement of the rotor of the above-mentioned motor.
FIG. 12D is a diagram illustrating movement of the rotor of the above-mentioned motor.

### Description of Embodiments

Embodiments of a motor, a motor system, and a detection method of a mechanical angle of the motor that are disclosed in the present application will be described in detail below, with reference to the accompanying drawings. However, the present invention is not limited to illustrations of the following embodiments.

### First embodiment

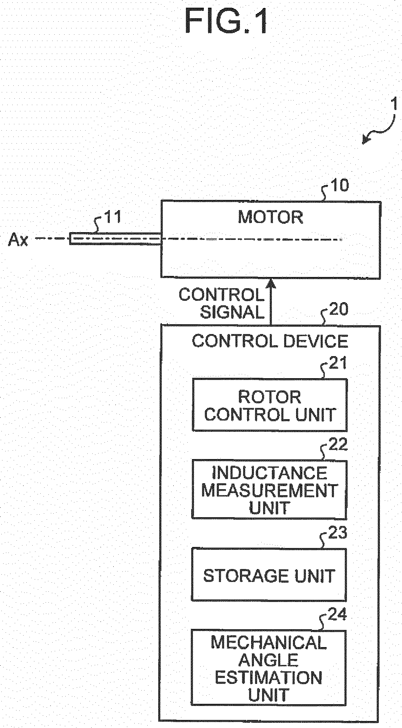

FIG. 1 is a block diagram illustrating a general configuration of a motor system according to a first embodiment. As illustrated in the drawing, a motor system 1 includes a motor 10 and a control device 20. The control device 20 includes a rotor control unit 21 (that may simply be called a "control unit 21" below), an inductance measurement unit 22 (that may simply be called a "measurement unit 22" below), a storage unit 23, and a mechanical angle estimation unit 24.

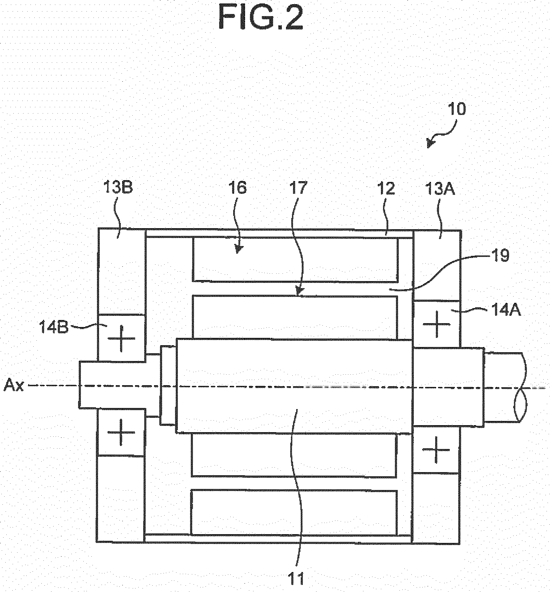

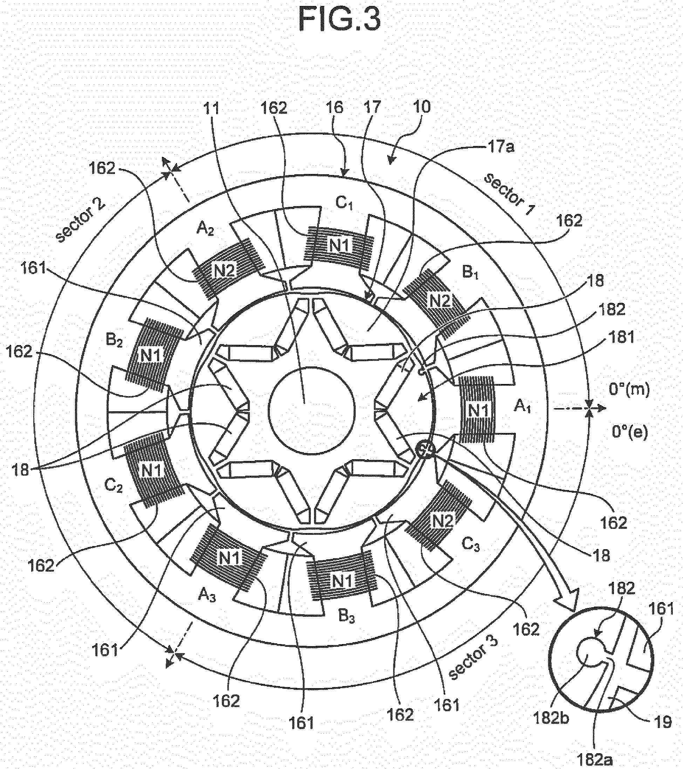

FIG. 2 is a longitudinal sectional view illustrating the motor 10 that is included in the above-mentioned motor system 1 and FIG. 3 is a transverse sectional view illustrating the motor 10 according to the first embodiment.

The motor 10 includes a rotor 17 that has a cylindrical rotor core 17a and permanent magnets 18, and a stator 16 that is arranged opposite to this rotor 17 through an air gap 19. The rotor 17 and the stator 16 are concentrically arranged centered at a shaft center Ax of a rotating shaft 11 (see FIG. 2).

As illustrated in FIG. 2, the rotor 17 is attached to the rotating shaft 11. The rotating shaft 11 is rotatably held by brackets 13A, 13B fastened on a frame 12, through bearings 14A, 14B. The stator 16 is such that its periphery is held by the frame 12.

It is preferable for the rotor 17 to be such that the total number of magnetic poles (magnetic pole number) on a surface that faces the air gap 19 is at least 4 or more. Herein, the rotor 17 has six magnetic poles that face the air gap 19.

As illustrated in FIG. 3, the rotor 17 is such that six magnetic poles formed by arranging a pair of the permanent magnets 18, 18 in a substantial V-shape are provided in the rotor core 17a in a circumferential direction thereof. That is, the rotor 17 according to the present embodiment is an internal permanent magnet (IPM) motor where the total number of magnetic poles is six.

The motor 10 according to the first embodiment is such that a magnetoresistance of at least one of the six magnetic poles is different from those of the others. A magnetic pole with a magnetoresistance different from those of the others is an index magnetic pole 181 that is an index in the rotor 17. As illustrated in FIG. 3, the index magnetic pole 181 in the first embodiment is configured in such a manner that grooves 182 are formed on a portion of the rotor core 17a (that may be described as a "core portion" below) that is included in at least one of the plurality of magnetic poles.

That is, the index magnetic pole 181 is provided by forming a pair of the grooves 182, 182 provided at a predetermined interval in the circumferential direction on one of the magnetic poles configured in such a manner that a pair of the permanent magnets 18, 18 is arranged in a substantial V-shape. Herein, the grooves 182 are formed at positions opposed to respective outer ends of the permanent magnets 18, 18 that are arranged so as to open in a substantial V-shape toward a periphery side of the rotor core 17a. Although one index magnetic pole 181 is provided herein, a plurality thereof can also be provided.

As illustrated in FIG. 3, each groove 182 is formed into a keyhole shape. That is, the groove 182 is composed of a rectangular groove 182a that notches the stator core 17a from a periphery to an internal portion, and a circular groove 182b that is continuous with this rectangular groove 182a. Herein, a diameter of the circular groove 182b is greater than a length of one side of the rectangular groove 182a that has a substantial square shape.

A shape of the groove 182 is not necessarily limited to a keyhole shape and can also be an appropriate shape. It can also be a (not-illustrated) hole that is formed so as to separate from a periphery of the rotor core 17a, instead of the groove 182 that is continuous with the periphery of the rotor core 17a. It is also possible to design a shape of such a hole appropriately. For the number of the grooves 182 and their arrangement, it is possible to design them appropriately.

Thus, the motor 10 in the present embodiment has the at least one index magnetic pole 181 with a magnetoresistance greater than those of the others among the plurality of magnetic poles that are formed of the plurality of permanent magnets 18 arranged in a circumferential direction of the rotor core 17a.

On the other hand, the stator 16 is configured in such a manner that a plurality of coils 162 are wound around respective slots 161 for each of a plurality of phases. The number of turns of one of the plurality of coils 162 is different from those of the others for each phase. That is, the stator 16 in the motor 10 according to the present embodiment is a three-phase and nine-slot stator, where phase A (A1, A2, A3), phase B (B1, B2, B3), and phase C (C1, C2, C3) are provided at a phase of 120 degrees one another.

As illustrated in FIG. 3, the stator 16 according to the present embodiment is such that the numbers of turns of the coils 162 that are concentrated-wound in each phase of the alternate current three phases are N2 turns for phase A2 in phase A, phase B1 in phase B, and phase C3 in phase C and N1 turns for the others.

As illustrated in the drawing, the rotor 17 is mechanically compartmented into sectors 1, 2, and 3 at a counterclockwise interval of a mechanical angle of 120 degrees (electrical angle of 360 degrees). The coil 162 with N2 turns is present in each of the sectors 1, 2, and 3. N1 turns and 2 turns that indicate the numbers of turns are set at appropriate numbers, for example, 30 turns, 60 turns, or the like, in such a manner that both of them are different. The mechanically compartmented sectors 1, 2, and 3 are stored in the storage unit 23 as sector information.

Due to the configuration described above, it is difficult for magnetic flux to pass through a portion that is the groove 182, and hence, an inductance is different depending on its relations to the number of turns for the slot 161 in the stator 16 and the index magnetic pole 181 of the rotor 17. Therefore, detection of a mechanical angle is possible due to a difference from an inductance for an adjacent phase.

Thus, the motor 10 according to the present embodiment is such that magnetic poles of the rotor 17 have rotationally asymmetric magnetoresistances and the stator 16 has rotationally asymmetric numbers of turns of the coils 162 on the slots 161. For that reason, for example, a magnetic flux density in the air gap 19 that is generated by the rotor 17 changes at each position of the index magnetic pole 181 in a case where a mechanical angle of 360 degrees is one period, so that a magnetic flux distribution is not rotationally symmetric in a circumferential direction of the rotor 17.

Such a change of a magnetic flux density is exhibited as, for example, a change of an inductance. This change of an inductance can be detected by measuring electric current amplitude at the time of application of a high-frequency voltage or measuring voltage amplitude at the time of application of a high-frequency electric current. Therefore, it is not necessary to calculate or measure an inductance directly.

For that reason, the inductance measurement unit 22 of the control device 20 illustrated in FIG. 1 measures electric current amplitude at the time of application of a high-frequency voltage, and thereby, detects a change of an inductance.

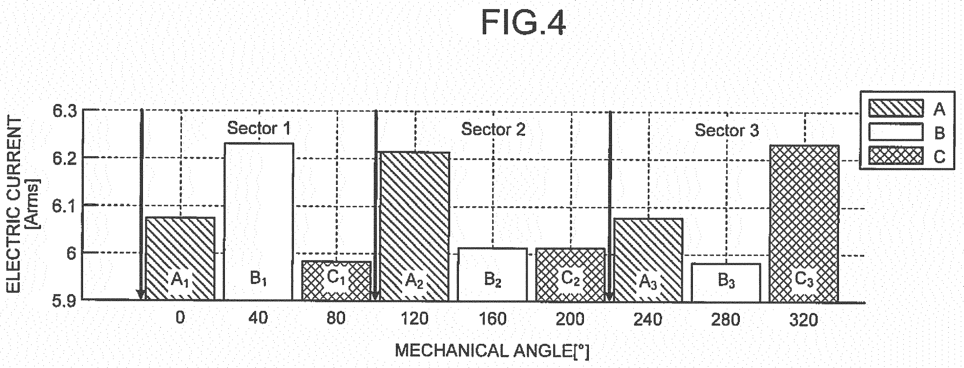

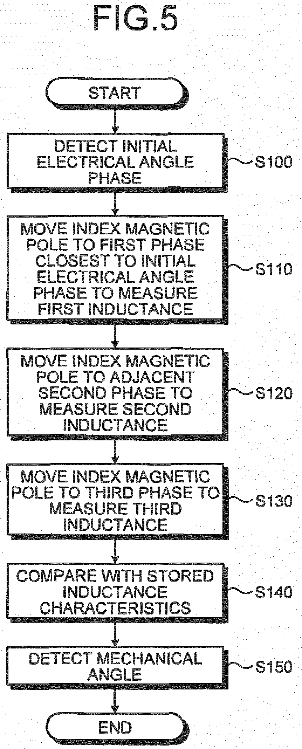

Herein, a detection method of a mechanical angle will be described by using FIG. 4 and FIG. 5 in addition to FIG. 1 to FIG. 3. FIG. 4 is a graph that is an example of base data for detecting a mechanical angle, the graph illustrating current amplitude with respect to high-frequency voltage application at a position of each phase of the motor 10 according to the present embodiment. In this FIG. 4, a condition of the numbers of turns of the coils 162 is a case of N1 < N2. FIG. 5 is a diagram illustrating exemplary steps of a detection method of a mechanical angle of the motor 10.

Detection of a mechanical angle of the rotor 17 in the motor 10 according to the present embodiment can be executed without utilizing a position detector such as an encoder. That is, detection of a mechanical angle of the rotor 17 is executed by the control device 20 illustrated in FIG. 1 in accordance with steps illustrated in FIG. 5.

The storage unit 23 of the control device 20 preliminarily stores, as a reference inductance, an inductance characteristic in a case where the index magnetic pole 181 of the rotor 17 is present at a position that corresponds to each slot 161 of the stator 16, before going to steps in FIG. 5.

For example, as illustrated in FIG. 4, a table of data that associate a mechanical angle that indicates a position of the rotor 17 with an effective value of electric current at the time of application of a high-frequency voltage, or the like, is made and stored in the storage unit 23. FIG. 4 illustrates an effective value of electric current in a case were a high-frequency voltage is applied when the index magnetic pole 181 is present at a position that corresponds to each phase. Phase A (A1, A2, A3), phase B (B1, B2, B3), and phase C (C1, C2, C3) that are illustrated in FIG. 3 and FIG. 4 correspond to one another. Although FIG. 4 illustrates an effective value of electric current, a peak value of electric current amplitude may be used instead of the effective value of electric current.

When going to steps in FIG. 5, the control unit 21 of the control device 20 first detects an initial electrical angle phase (step S100). The detected initial electrical angle phase is stored in the storage unit 23. This detection of an initial electrical angle phase utilizes a magnetic saliency of the motor 10, and can be executed by a well-known detection method that utilizes, for example, a high-frequency signal, and a magnetic saturation characteristic, a magnetic hysteresis characteristic, or the like.

Then, the control unit 21 moves the index magnetic pole 181 to a position that corresponds to a closest first phase (one of electrical angles of 0, 120, and 240 degrees) and the measurement unit 22 measures a first inductance (step S110). For example, the control device 20 moves the index magnetic pole 181 to a position indicated by A₁ in FIG. 3 where an electrical angle is 0 degrees and the number of turns of the coil 162 is N1, and measures a fist inductance.

Then, the control unit 21 moves the index magnetic pole 181 to a position that corresponds to an adjacent second phase and the measurement unit 22 measures a second inductance (step S120). For example, the control device 20 moves the index magnetic pole 181 to a position indicated by B₁ in FIG. 3 where an electrical angle is 120 degrees and the number of turns of the coil 162 is N2, and measures a second inductance.

The control unit 21 further moves the index magnetic pole 181 to a position that corresponds to a third phase and the measurement unit 22 measures a third inductance (step S130). For example, the control device 20 moves the index magnetic pole 181 to a position indicated by C₁ in FIG. 3 where an electrical angle is 240 degrees and the number of turns of the coil 162 is N1, and measures a second inductance. Subsequently, the control unit 21 causes its process to go to step S140.

At step S140, the control unit 21 causes the mechanical angle estimation unit 24 to compare the inductances measured at steps S110, 120, and 130 with the reference inductance characteristics that are preliminarily stored in the storage unit 23. The mechanical angle estimation unit 24 detects (estimates) a mechanical angle of the rotor 17 from a magnitude relation of values of the plurality of (herein, three) measured inductances and the inductance characteristics illustrated in FIG. 4 (step S150). For example, if steps S110, 120, and 130 execute measurement at positions of phase A, phase B, and phase C, respectively, a case where a second inductance is greatest among measured inductances is one of A₁, B₁, and C₁. For example, if a position at the last step S130 is phase C, an obtained mechanical angle is C₁, namely, 80 degrees.

Thus, the control device 20 preliminarily an inductance characteristic in a case where the index magnetic pole 181 of the rotor 17 is present at a position that corresponds to each slot 161 of the stator 16, and detects an initial electrical angle phase. For that reason, the control device 20 uses, and compares detected inductances with, base data (see FIG. 4), whereby a mechanical angle of the rotor 17 can be detected.

The description for measurement of an inductance in a step based on FIG. 5 can be read as measurement of electric current amplitude at the time of application of a high-frequency voltage as described previously.

A detection method of a mechanical angle of the motor 10 described above has the following steps that are executed by the control device 20.
(a) A step of preliminarily storing an inductance characteristic in a case where the index magnetic pole 181 that is an index of the rotor 17 is present at each slot 161 of the stator 16. (b) A step of detecting an initial electrical angle phase of the rotor 17 by utilizing magnetic saliency of the motor 10. (c) A step of moving the index magnetic pole 181 to a first position that corresponds to an arbitrary first phase based on the initial electrical angle phase. (d) A step of applying a high-frequency signal to the first phase to measure a first inductance. (e) A step of moving the index magnetic pole 181 to a second position that is adjacent to the first position and corresponds to a second phase. (f) A step of applying a high-frequency signal to the second phase to measure a second inductance. (g) A step of moving the index magnetic pole 181 to a third position that is different from the first position and the second position and corresponds to a third phase. (h) A step of applying a high-frequency signal to the third phase to measure a third inductance. (i) A step of obtaining a mechanical angle of the rotor 17 based on a magnitude relation among the first - third inductances measured at the plurality of positions, and the stored inductance characteristics. For example, a closest first phase can be selected for the arbitrary first phase at step (c) so as to reduce an amount of movement as described by using FIG. 5.

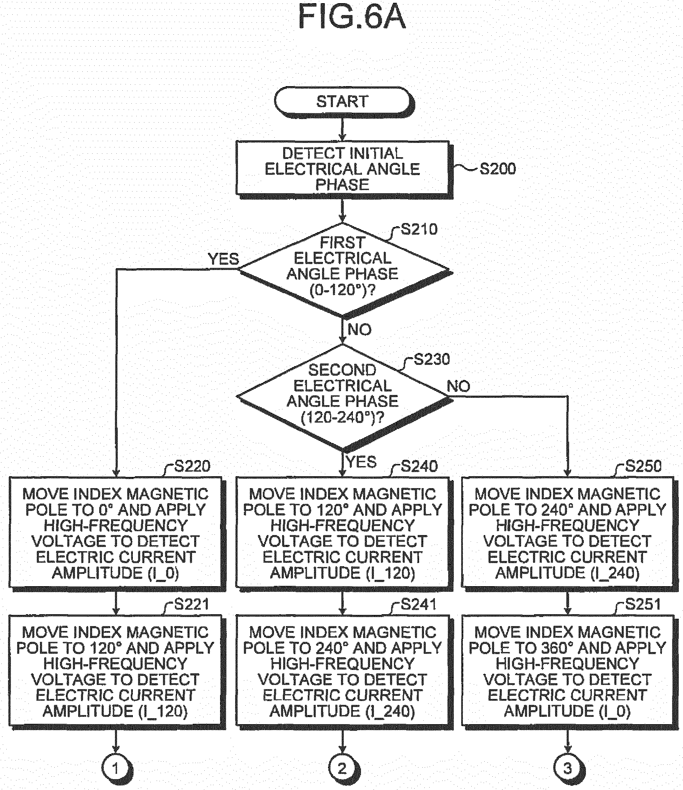

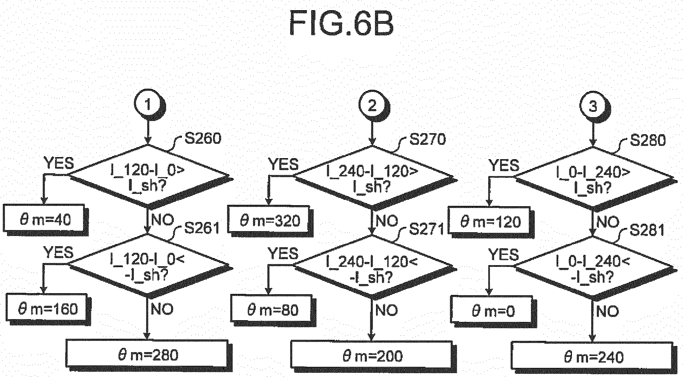

A detection method of a mechanical angle of the rotor 17 in the motor 10 according to the first embodiment illustrated in FIG. 3 can also be steps illustrated in FIGS. 6A and 6B. In this case, it is also preferable to use base data as illustrated in FIG. 4. A variation of a detection method of a mechanical angle of the rotor 17 will be described below, by using FIG. 6A - FIG. 7C.

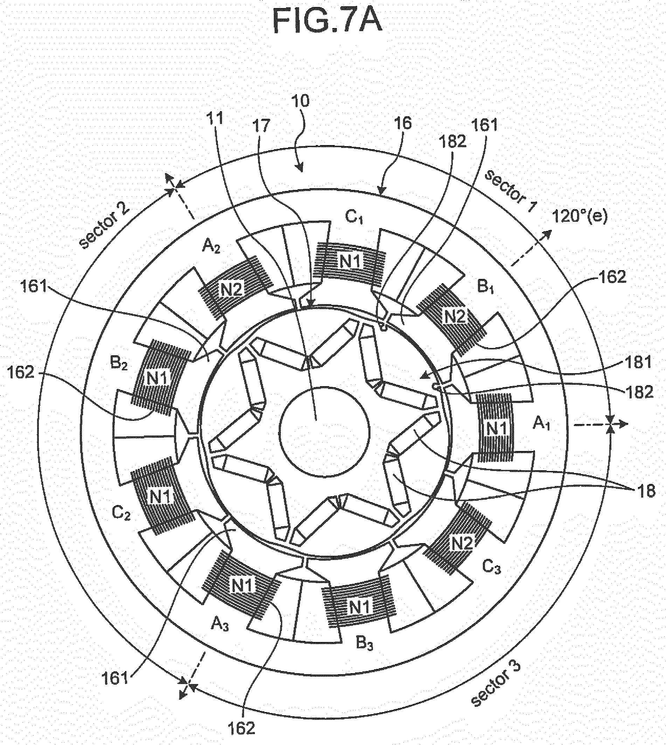

FIG. 6A and FIG. 6B are diagrams illustrating an exemplary first-half steps and an exemplary second-half steps of the detection method of the mechanical angle of the motor 10. FIG. 7A to FIG. 7C are diagrams illustrating movement of the rotor 17 of the motor 10. In the following, an electrical angle may be denoted by θe and a mechanical angle may be denoted by θm.

In this case, the storage unit 23 of the control device 20 also preliminarily stores an inductance characteristic in a case where the index magnetic pole 181 of the rotor 17 is present at a position that corresponds to each slot 161 of the stator 16, before going to steps in FIG. 6A.

When going to the steps in FIG. 6A, the control unit 21 of the control device 20 first detects an initial electrical angle phase (step S200). In this case, detection of an initial electrical angle phase can also be executed by the well-known detection method described previously.

Then, the control unit 21 determines whether or not the detected initial electrical angle phase is a first electrical angle phase (0 to 120 degrees) (step S210). In a case where determination is provided in such a manner that it is the first electrical angle phase (step S210: Yes), the control unit 21 causes its process to go to step S220. On the other hand, in a case where determination is provided in such a manner that it is not the first electrical angle phase (step S210: No), the control unit 21 causes its process to go to step S230.

In a case where the detected initial electrical angle phase is the first electrical angle phase (0 to 120 degrees), the control unit 21 moves the index magnetic pole 181 to an electrical angle of 0 degrees. The measurement unit 22 applies a high-frequency signal to detect electric current amplitude (I_0) (step S220). That is, the control device 20 applies a high-frequency signal at an electrical angle of 0 degrees, where the index magnetic pole 181 is at a position of one of A₁, A₂, and A₃, to measure a first inductance.

Then, the control unit 21 moves the index magnetic pole 181 to an electrical angle of 120 degrees and the measurement unit 22 applies a high-frequency signal to detect electric current amplitude (I_120) (step S221). That is, the control device 20 applies a high-frequency signal at an electrical angle of 120 degrees, where the index magnetic pole 181 is at a position denoted by one of B₁, B₂, and B₃, to measure a second inductance.

Subsequently, the control unit 21 causes its process to go to step S260 in FIG. 6B and causes the mechanical angle estimation unit 24 to determine whether or not (I_120) - (I_0) is greater than I_sh. Herein, I_sh is an appropriately defined determination criterion value.

If (I_120) - (I_0) > I_sh (step S260: Yes), base data (see FIG. 4) are referred to, and thereby, a mechanical angle θm is set at 40 degrees. That is, as FIG. 4 is referred to, an inductance difference between a position of an electrical angle of 120 degrees (mechanical angle of one of 40 degrees, 160 degrees, and 280 degrees) and a position of an electrical angle of 0 degrees (mechanical angle of one of 0 degrees, 120 degrees, and 240 degrees) has a positive slope when the electrical angle of 0 degrees and the electrical angle of 120 degrees are present at positions of a mechanical angle of 0 degrees and a mechanical angle of 40 degrees for the index magnetic pole 181, respectively. This corresponds to a case where a first inductance is measured at position A₁ of the index magnetic pole 181 as illustrated in FIG. 3 and a second inductance is measured at a position B₁ of the index magnetic pole 181 as illustrated in FIG. 7A.

On the other hand, if not (I_120) - (I_0) > I_sh (step S260: No), the mechanical angle estimation unit 24 determines whether or not (I_120) - (I_0) is less than-I_sh (step S261).

If (I_120) - (I_0) < -I_sh (step S261: Yes), base data (see FIG. 4) are referred to, and thereby, a mechanical angle θm is set at 160 degrees. That is, as FIG. 4 is referred to, an inductance difference between a position of an electrical angle of 120 degrees (mechanical angle of one of 40 degrees, 160 degrees, and 280 degrees) and a position of an electrical angle of 0 degrees (mechanical angle of one of 0 degrees, 120 degrees, and 240 degrees) has a negative slope when the electrical angle of 0 degrees and the electrical angle of 120 degrees are present at positions of a mechanical angle of 120 degrees and a mechanical angle of 160 degrees for the index magnetic pole 181, respectively. That is, this corresponds to a case where an inductance is measured at each of positions A₂ and B₂ for the index magnetic pole 181.

On the other hand, if not (I_120) - (I_0) < -I_sh (step S261: No), base data (see FIG. 4) are referred to, and thereby, a mechanical angle θm is set at 280 degrees. That is, as FIG. 4 is referred to, an inductance difference between a position of an electrical angle of 120 degrees (mechanical angle of one of 40 degrees, 160 degrees, and 280 degrees) and a position of an electrical angle of 0 degrees (mechanical angle of one of 0 degrees, 120 degrees, and 240 degrees) is little (a slope near zero), that is, an absolute value of the difference is less than I_sh, when the electrical angle of 0 degrees and the electrical angle of 120 degrees are present at positions of a mechanical angle of 240 degrees and a mechanical angle of 280 degrees for the index magnetic pole 181, respectively.

On the other hand, at step S230, the control unit 21 determines whether or not the initial electrical angle phase is a second electrical angle phase (120 to 240 degrees). If determination is provided in such a manner that it is the second electrical angle phase (120 to 240 degrees) (step S230: Yes), the control unit 21 moves the index magnetic pole 181 to an electrical angle of 120 degrees. The measurement unit 22 applies a high-frequency signal to detect electric current amplitude (I_120) (step S240). That is, the control device 20 applies a high-frequency signal at an electrical angle of 120 degrees, where the index magnetic pole 181 is at a position of one of B₁, B₂, and B₃, to measure a first inductance.

Then, the control unit 21 moves the index magnetic pole 181 to an electrical angle of 240 degrees, and the measurement unit 22 applies a high-frequency signal, to detect electric current amplitude (I_240) (step S241). That is, the control device 20 applies a high-frequency signal at an electrical angle of 240 degrees, where the magnetic pole 181 is at a position of one of C₁, C₂, and C₃, to measure a second inductance.

Subsequently, the control unit 21 causes its process to go to step S270 in FIG. 6B and causes the mechanical angle estimation unit 24 to determine whether or not (I_240) - (I_120) is greater than I_sh.

If (I_240) - (I_120) > I_sh (step S270: Yes), the mechanical angle estimation unit 24 refers to base data (see FIG. 4), and thereby, sets a mechanical angle θm at 320 degrees. That is, as FIG. 4 is referred to, an inductance difference between a position of an electrical angle of 240 degrees (a mechanical angle of one of 80 degrees, 200 degrees, and 320 degrees) and a position of an electrical angle of 120 degrees (a mechanical angle of one of 40 degrees, 160 degrees, and 280 degrees) has a positive slope at a position of a mechanical angle of 320 degrees.

On the other hand, if not (I_240) - (I_120) > I_sh (step S270: No), the mechanical angle estimation unit 24 determines whether or not (I_240) - (I_120) is less than -I_sh (step S271).

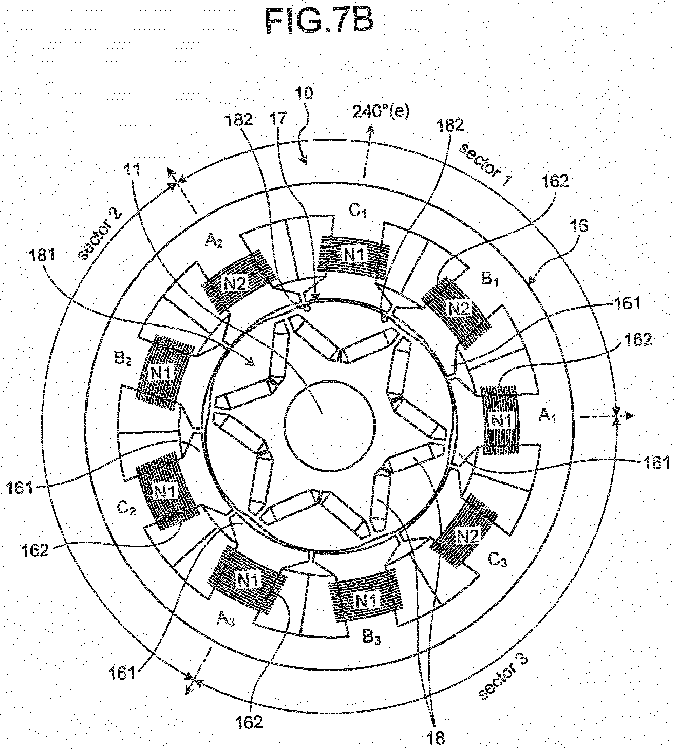

If (I_240) - (I_120) < -I_sh (step S271: Yes), base data (see FIG. 4) are referred to, and thereby, a mechanical angle θm is set at 80 degrees. That is, as FIG. 4 is referred to, an inductance difference between a position of an electrical angle of 240 degrees (a mechanical angle of one of 80 degrees, 200 degrees, and 320 degrees) and a position of an electrical angle of 120 degrees (a mechanical angle of one of 40 degrees, 160 degrees, and 280 degrees) has a negative slope at a position of a mechanical angle of 80 degrees. This corresponds to a case where a first inductance is measured at a position of the index magnetic pole 181 as illustrated in FIG. 7A and a second inductance is measured at a position of the index magnetic pole 181 as illustrated in FIG. 7B.

On the other hand, if not (I_240) - (I_120) <-I_sh (step S271: No), base data (see FIG. 4) are referred to, and thereby, a mechanical angle θm is set at 200 degrees. That is, as FIG. 4 is referred to, an inductance difference between a position of an electrical angle of 240 degrees (mechanical angle of one of 80 degrees, 200 degrees, and 320 degrees) and a position of an electrical angle of 120 degrees (mechanical angle of one of 40 degrees, 160 degrees, and 280 degrees) is little or has a slope near zero, that is, an absolute value of the difference is less than I_sh, at a position of a mechanical angle of 200 degrees.

On the other hand, at step S230, if determination is provided in such a manner that it is not a first electrical angle phase (0 to 120 degrees) or a second electrical angle phase (120 to 240 degrees) (step S230: No), the mechanical angle estimation unit 24 causes its process to go to step S250.

That is, the control unit 21 determines in such a manner that it is a third electrical angle phase (240 to 360 (0) degrees) and moves the index magnetic pole 181 to an electrical angle of 240 degrees. The measurement unit 22 applies a high-frequency signal to detect electric current amplitude (I_240) (step S250). That is, the control device 20 applies a high-frequency signal at an electrical angle of 240 degrees, where the index magnetic pole 181 is at a position of one of C₁, C₂, and C₃, to measure a first inductance.

Then, the control unit 21 moves the index magnetic pole 181 to an electrical angle of 360 (0) degrees and the measurement unit 22 applies a high-frequency signal to detect electric current amplitude (I_0 (360)) (step S251). That is, the control device 20 applies a high-frequency signal at an electrical angle of 360 degrees, where the index magnetic pole 181 is at a position of one of A₁, A₂, and A₃, to measure a second inductance.

Subsequently, the control unit 21 causes its process to go to step S280 in FIG. 6B, and the mechanical angle estimation unit 24 determines whether or not (I_0)-(I_240) is greater than I_sh.

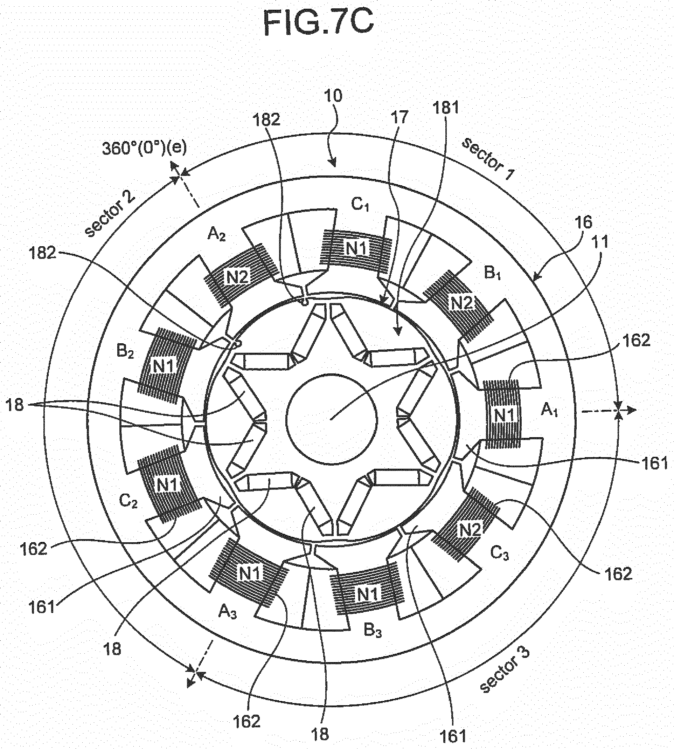

If (I_0) - (I_240) > I_sh (step S280: Yes), the mechanical angle estimation unit 24 refers to base data (see FIG. 4), and thereby, set a mechanical angle θm at 120 degrees. That is, as FIG. 4 is referred to, an inductance difference between a position of an electrical angle of 0 (360) degrees (mechanical angle of one of 0 degrees, 120 degrees, and 240 degrees) and a position of an electrical angle of 240 degrees (mechanical angle of one of 80 degrees, 200 degrees, and 320 degrees) has a positive slope at a position of a mechanical angle of 120 degrees. This corresponds to a case where a first inductance is measured at a position of the index magnetic pole 181 in FIG. 7B and a second inductance is measured at a position of the index magnetic pole 181 in FIG. 7C.

On the other hand, if not (I_0) - (I_240) > I_sh (step S280: No), the mechanical angle estimation unit 24 determines whether or not (I_0) - (I_240) is less than-I_sh (step S281).

If (I_0) - (I_240) < -I_sh (step S281: Yes), base data (see FIG. 4) are referred to, and thereby, a mechanical angle θm is set at 0 degrees. That is, as FIG. 4 is referred to, an inductance difference between a position of an electrical angle of 0 (360) degrees (mechanical angle of one of 0 degrees, 120 degrees, and 240 degrees) and a position of an electrical angle of 240 degrees (mechanical angle of 80 degrees, 200 degrees, and 320 degrees) has a negative slope at a position of a mechanical angle of 0 degrees.

On the other hand, if not (I_0) - (I_240) < -I_sh (step S281: No), base data (see FIG. 4) are referred to, and thereby, a mechanical angle θm is set at 240 degrees. That is, as FIG. 4 is referred to, an inductance difference between a position of an electrical angle of 0 (360) degrees (mechanical angle of one of 0 degrees, 120 degrees, and 240 degrees) and a position of an electrical angle of 240 degrees (mechanical angle of one of 80 degrees, 200 degrees, and 320 degrees) is little or has a slope near zero, that is, an absolute value of the difference is less than I_sh, at a position of a mechanical angle of 240 degrees.

Thus, the order of movement of the index magnetic pole 181 is not relevant in the detection method of a mechanical angle according to the variation, and a mechanical angle θm is obtained at a last position of the movement. Whereas it is necessary to rotate the rotor 17 by a mechanical angle of up to 100 degrees in the previous detection method (see FIG. 5), it is sufficient to be up to 40 degrees in the present detection method. It is not particularly necessary to divide the rotor 17 into sectors in the present detection method.

A mechanical angle detection method according to the variation of the motor 10 as described above has the following steps that are executed by the control device 20.

(a) A step of preliminarily storing an inductance characteristic in a case where the index magnetic pole 181 that is an index of the rotor 17 is present at each slot 161 of the stator 16. (b) A step of detecting an initial electrical angle phase of the rotor 17 by utilizing magnetic saliency of the motor 10. (c) A step of moving the index magnetic pole 181 to a position of an arbitrary first phase and applying a high-frequency signal to obtain a first inductance. (d) A step of moving a position of the index magnetic pole 181 to a position of a second phase adjacent to the first phase and applying a high-frequency signal to obtain a second inductance. (e) A step of obtaining a mechanical angle of the rotor 17 based on a difference value between the first inductance and the second inductance and the stored inductance characteristics. For example, a closest first phase can be selected for the arbitrary first phase at step (c) to reduce an amount of movement as described by using FIG. 6A. At step (d), it moves to a position of the second phase adjacent to the first phase, for a next-closest position.

### Second embodiment

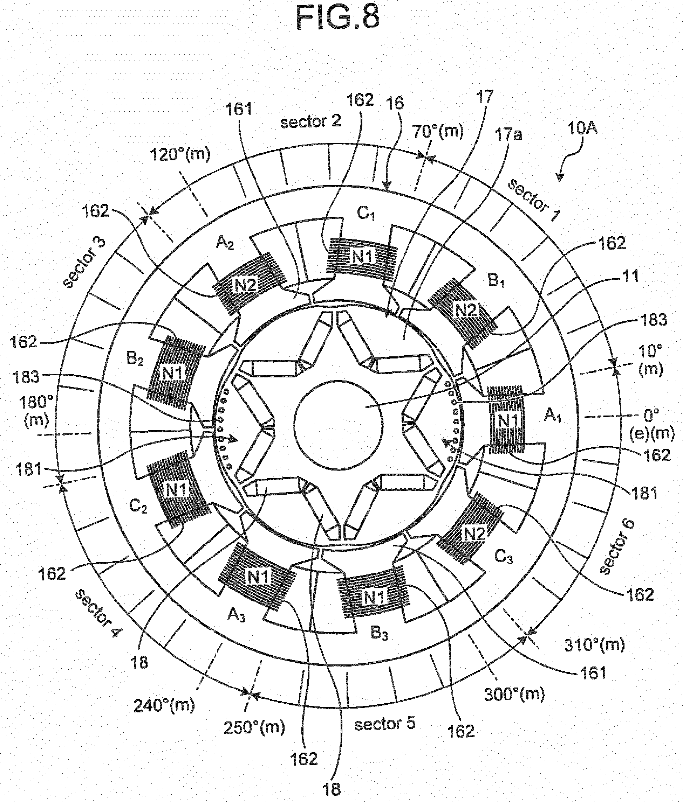

FIG. 8 is a transverse sectional view illustrating a motor 10A according to a second embodiment. The motor 10A basically has the same configuration as the motor 10 according to the first embodiment illustrated in FIG. 2 and FIG. 3. That is, the motor 10A is different from the motor 10 in the number and shapes of index magnetic poles 181 with a magnetoresistance greater than those of the others. In the present embodiment, it is also possible to accurately estimate a rotational position of a rotor 17 without using an encoder or the like.

As illustrated in FIG. 8, the motor 10A is such that two index magnetic poles 181 are provided at an interval of 180 degrees. That is, the two index magnetic poles 181 are provided at point-symmetric positions. Whereas the index magnetic pole 181 in the motor 10 according to the first embodiment is provided by formation of the grooves 182, the index magnetic poles 181 in the motor 10A according to the second embodiment are provided by forming a plurality of small holes 183 in a circumferential direction. The other components are the same components as the motor 10 according to the first embodiment, and the descriptions thereof will be omitted herein.

Thus, the rotor 17 of the motor 10A according to the second embodiment is configured in such a manner that the index magnetic poles 181 are provided by forming the plurality of small holes 183 on a core portion that is included in at least one of a plurality of (six) magnetic poles, in a circumferential direction. For example, a long arc hole can also be provided, instead of the plurality of small holes 183.

As illustrated in the drawing, the rotor 17 is mechanically compartmented into sectors 1, 2, 3, 4, 5, and 6 at an interval of 60 degrees (an electrical angle of 180 degrees) counterclockwise from a reference point that is a position of a mechanical angle of 10 degrees. The compartmented sectors 1, 2, 3, 4, 5, and 6 are stored in the storage unit 23 as sector information.

A coil 162 with N2 turns for sector 1, a coils 162 with N1 turns and N2 turns for sector 2, and a coil 162 with N1 turns for sector 3 are counterclockwise provided for nine slots 161. In addition, two coils 162 with N1 turns for sector 4, a coil 162 with N1 turns for sector 5, and coils 162 with N2 turns and N1 turns for sector 6 are provided.

### Third embodiment

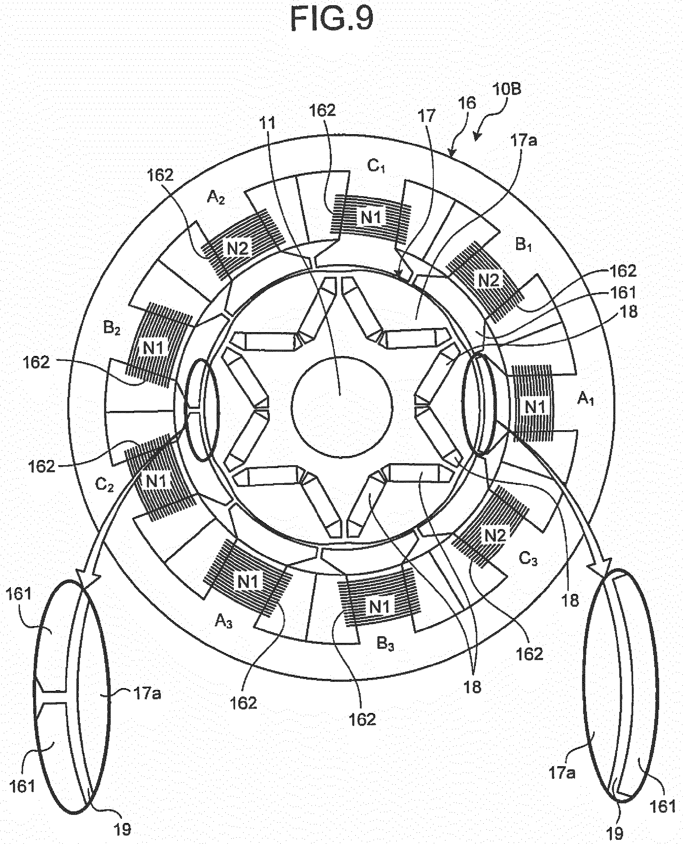

FIG. 9 is a transverse sectional view illustrating a motor 10B according to a third embodiment. The motor 10B basically has the same configuration as the motor 10A according to the second embodiment illustrated in FIG. 8. The motor 10B is different from the motor 10A in shapes of the index magnetic poles 181.

As illustrated in FIG. 9, two index magnetic poles 181 are also provided at an interval of 180 degrees in the motor B, similarly to the motor 10A. The index magnetic poles 181 in the motor 10A are provided by formation of the plurality of small holes 183.

However, the index magnetic poles 181 in the motor 10B are provided so that a size of an air gap 19 corresponding to a core portion included in one of a pair of opposed magnetic poles is different from that of the other. Specifically, a width of the air gap 19 at a core portion of the index magnetic pole 181 is formed to be greater than the other portions, so that a magnetoresistance is increased. The other components are the same components of the first or second embodiment, and the descriptions thereof will be omitted herein. In the present embodiment, it is also possible to accurately estimate a rotational position of a rotor 17 without using an encoder or the like.

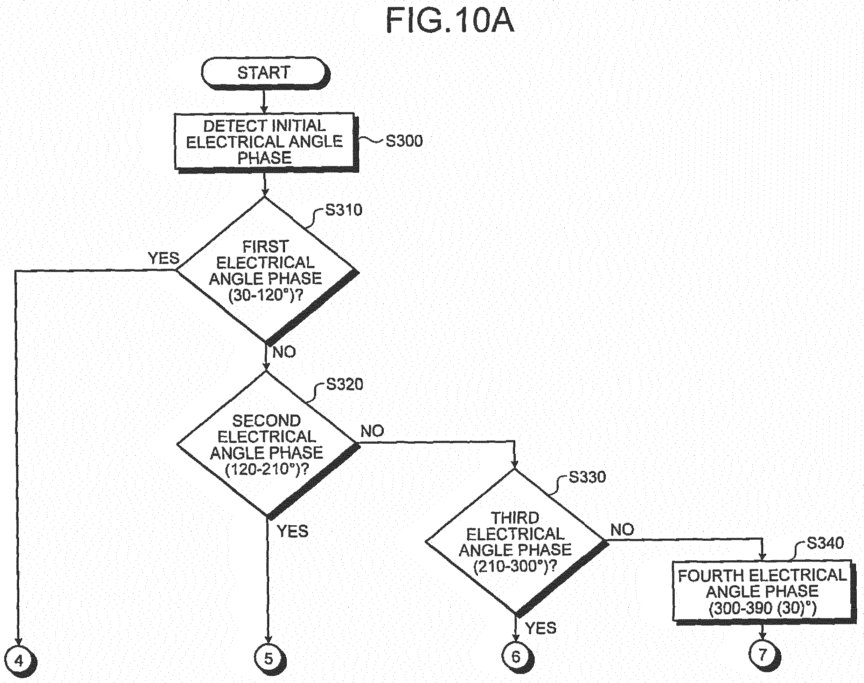

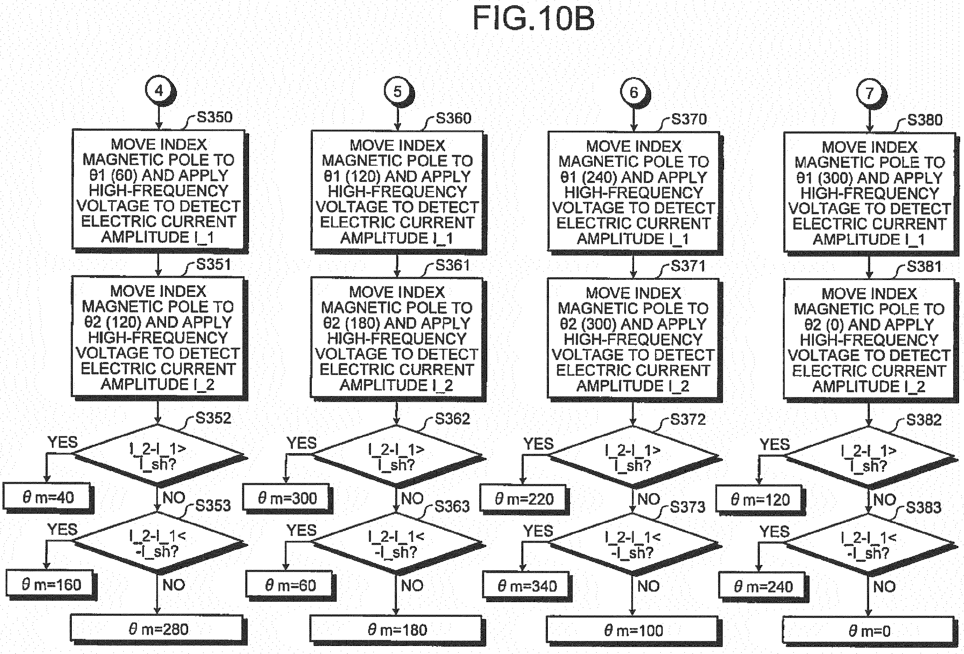

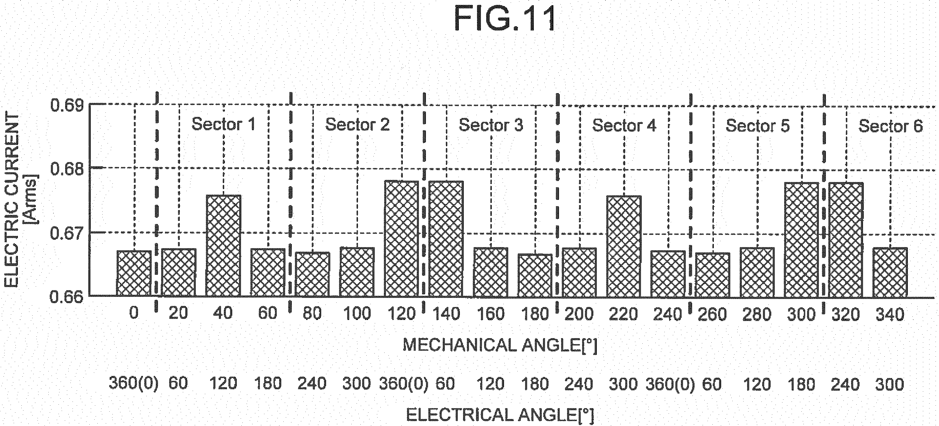

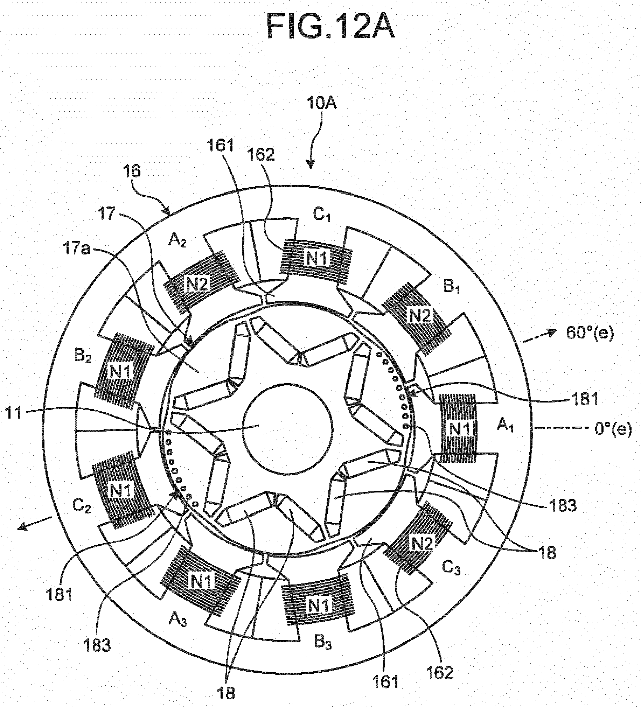

Next, a detection method of a mechanical angle of the motor 10A or 10B according to the second or third embodiment will be described by using FIG. 10A to FIG. 12D. FIG. 10A is a diagram illustrating an exemplary first-half steps of a detection method of a mechanical angle of the motor 10A and FIG. 10B is a diagram illustrating an exemplary second-half steps thereof. FIG. 11 is a graph that is an example of base data for detecting a mechanical angle, the graph illustrating a value of electric current with respect to the mechanical angle of the motor 10A for each phase. In this FIG. 11, a condition of the numbers of turns of the coils 162 is a case of N1 < N2. FIG. 12A to FIG. 12D are diagrams illustrating movement of a rotor 17 of the motor 10A. Although the motor 10A according to the second embodiment is used herein, the motor 10B according to the third embodiment can also be used.

Before going to steps in FIG. 10A, the storage unit 23 of the control device 20 preliminarily stores an inductance characteristic in a case where the index magnetic poles 181, 181 of the rotor 17 are present at positions that correspond to the respective slots 161 of the stator 16.

When going to the steps in FIG. 10A, the control unit 21 of the control device 20 first detects an initial electrical angle phase (step S300). In this case, detection of an initial electrical angle phase can also be executed by the well-known detection method described previously.

Then, the control unit 21 determines whether or not the detected initial electrical angle phase is a first electrical angle phase (30 to 120 degrees) (step S310). If determination is provided in such a manner that it is the first electrical angle phase (step S310: Yes), the control unit 21 causes its process to go to step S350 illustrated in FIG. 10B. On the other hand, if determination is provided in such a manner that it is not the first electrical angle phase (step S310: No), the control unit 21 causes its process to go to step S320.

At step S320, the control unit 21 determines whether or not the detected initial electrical angle phase is a second electrical angle phase (120 to 210 degrees). If determination is provided in such a manner that it is the second electrical angle phase (step S320: Yes), the control unit 21 causes its process to go to step S360 illustrated in FIG. 10B. On the other hand, if determination is provided in such a manner that it is not the second electrical angle phase (step S310: No), the control unit 21 causes its process to go to step S330.

At step S330, the control unit 21 determines whether or not the detected initial electrical angle phase is a third electrical angle phase (210 to 300 degrees). If determination is provided in such a manner that it is the third electrical angle phase (step S330: Yes), the control unit 21 causes its process to go to step S370 illustrated in FIG. 10B. On the other hand, if determination is provided in such a manner that it is not the third electrical angle phase (step S310: No), the control unit 21 causes its process to go to step S340. At this step S340, the control unit 21 determines that the detected initial electrical angle phase is a fourth electrical angle phase (300 to 390 (30) degrees).

The present detection method cannot detect a mechanical angle across sectors, and hence, a process at or after S310 is executed under the condition that the initial electrical angle phase is within a range of -150 degrees to 30 degrees (sector 2, sector 4, or sector 6 in FIG. 8) or 30 degrees to 210 degrees (sector 1, sector 3, or sector 5 in FIG. 8).

As illustrated in FIG. 10B, at step S350, that is, in a case where the detected initial electrical angle phase is the first electrical angle phase, the control unit 21 moves one index magnetic poles 181 to θ1 (electrical angle of 60 degrees). For example, as illustrated in FIG. 12A, one index magnetic pole 181 is positioned between coils 162 with N1 turns for A₁ and with N2 turns for B₁ while the other index magnetic pole 181 is positioned to be opposed to the coil 162 with N1 turns for C₂. At such positions, the measurement unit 22 applies a high-frequency signal to detect electric current amplitude (I_1).

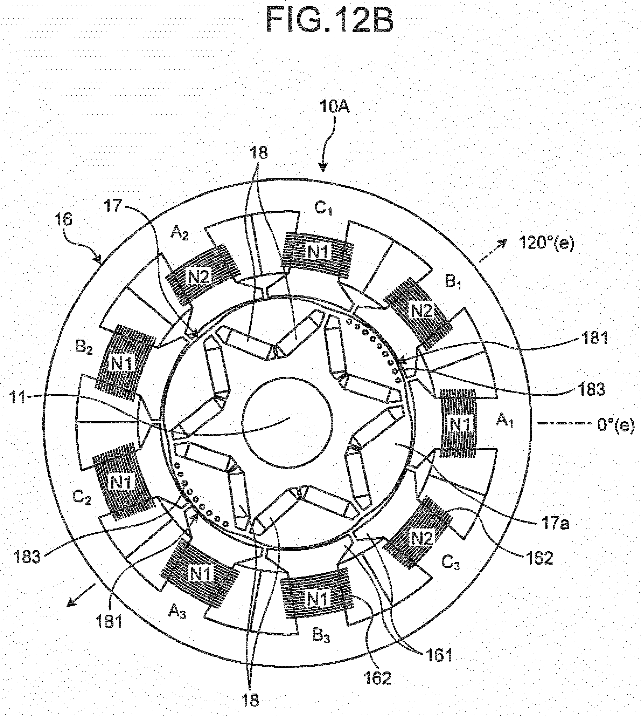

Then, the control unit 21 moves the index magnetic pole (181, 181) to θ2 (electrical angle of 120 degrees). For example, as illustrated in FIG. 12B, one index magnetic pole 181 is opposed to the coil 162 with N2 turns for B₁ while the other index magnetic pole 181 is positioned between the two coils 162, 162 with N1 turns for C₂ and A₃. At such positions, the measurement unit 22 applies a high-frequency signal to detect electric current amplitude (I_2) (step S351).

Subsequently, the control unit 21 causes its process to go to step S352 and causes the mechanical angle estimation unit 24 to determine whether or not (I_2)-(I_1) is greater than I_sh. Herein, I_sh is an appropriately defined determination criterion value.

If (I_2) - (I_1) > I_sh (step S352: Yes), base data (see FIG. 11) are referred to, and thereby, a mechanical angle θm is set at 40 degrees. That is, as FIG. 11 is referred to, an inductance difference between a position of an electrical angle of 120 degrees and a position of an electrical angle of 60 degrees has a positive slope when the index magnetic pole 181 is present at a position of a mechanical angle of 40 degrees (electrical angle of 120 degrees) (sector 1). This corresponds to a case where the index magnetic poles 181, 181 are present at positions as illustrated in FIG. 12A and FIG. 12B.

On the other hand, if not (I_2) - (I_1) > I_sh (step S352: No), the mechanical angle estimation unit 24 determines whether or not (I_2) - (I_1) is less than -I_sh (step S353).

If (I_2) - (I_1) < - I_sh (step S353: Yes), base data (see FIG. 11) are referred to, and thereby, a mechanical angle θm is set at 160 degrees. That is, as FIG. 11 is referred to, an inductance difference between a position of an electrical angle of 120 degrees and a position of an electrical angle of 60 degrees has a negative slope when the index magnetic pole 181 is present at a position of a mechanical angle of 160 degrees (electrical angle of 120 degrees) (sector 3).

On the other hand, if not (I_2) - (I_1) < -I_sh (step S353: No), base data (see FIG. 11) are referred to, and thereby, a mechanical angle θm is set at 280 degrees. That is, as FIG. 11 is referred to, an inductance difference between a position of an electrical angle of 120 degrees and a position of an electrical angle of 60 degrees is little or has a slope near zero, that is, an absolute value of the difference is less than I_sh, when the index magnetic pole 181 is present at a position of a mechanical angle of 280 degrees (electrical angle of 120 degrees) (sector 5).

On the other hand, if determination is provided in such a manner that the initial electrical angle phase is the second electrical angle phase (120 to 210 degrees) (step S320: Yes), the control unit 21 moves the index magnetic pole (181, 181) to θ1 (electrical angle of 120 degrees) at step S360. For example, as illustrated in FIG. 12B, one index magnetic pole 181 is opposed to the coil 162 with N2 turns for B₁ while the other index magnetic pole 181 is positioned between the two coils 162, 162 with N1 turns for C₂ and A₃. At such positions, the measurement unit 22 applies a high-frequency signal to detect electric current amplitude (I_1).

Then, the control unit 21 moves the index magnetic pole 181 to θ2 (electrical angle of 180 degrees). For example, although not illustrated in the drawing, one index magnetic pole 181 is positioned between the coils 162, 162 with N2 turns for B₁ and N1 turns for C₁, while the other index magnetic pole 181 is positioned to be opposed to the coil 162 with N1 turns for A₃. At such positions, the measurement unit 22 applies a high-frequency signal to detect electric current amplitude (I_2) (step S361).

Subsequently, the control unit 21 causes its process to go to step S362, and causes the mechanical angle estimation unit 24 to determine whether or not (I_2)-(I_1) is greater than I_sh.

If (I_2) - (I_1) > I_sh (step S362: Yes), base data (see FIG. 11) are referred to, and thereby, a mechanical angle θm is set at 300 degrees. That is, as FIG. 11 is referred to, an inductance difference between a position of an electrical angle of 180 degrees and a position of an electrical angle of 120 degrees has a positive slope when the index magnetic pole 181 is present at a position of a mechanical angle of 300 degrees (electrical angle of 180 degrees) (sector 5).

On the other hand, if not (I_2) - (I_1) > I_sh (step S362: No), the mechanical angle estimation unit 24 determines whether or not (I_2) - (I_1) is less than -I_sh (step S363).

If (I_2) - (I_1) < - I_sh (step S363: Yes), base data (see FIG. 11) are referred to, and thereby, a mechanical angle θm is set at 60 degrees. That is, as FIG. 11 is referred to, an inductance difference between a position of an electrical angle of 180 degrees and a position of an electrical angle of 120 degrees has a negative slope when the index magnetic pole 181 is present at a position of a mechanical angle of 60 degrees (electrical angle of 180 degrees) (sector 1). This corresponds to a case where the index magnetic poles 181, 181 are present at positions as illustrated in FIG. 12B and paragraph [0095] (one index magnetic pole 181 is positioned between the coils 162, 162 with N2 turns for B₁ and N1 turns for C₁, while the other index magnetic pole 181 is positioned to be opposed to the coil 162 with N1 turns for A₃).

On the other hand, if not (I_2) - (I_1) < -I_sh (step S363: No), base data (see FIG. 11) are referred to, and thereby, a mechanical angle θm is set at 180 degrees. That is, as FIG. 11 is referred to, an inductance difference between a position of an electrical angle of 180 degrees and a position of an electrical angle of 120 degrees is little or has a slope near zero, that is, an absolute value of the difference is less than I_sh, when the index magnetic pole 181 is present at a position of a mechanical angle of 180 degrees (electrical angle of 180 degrees) (sector 3).

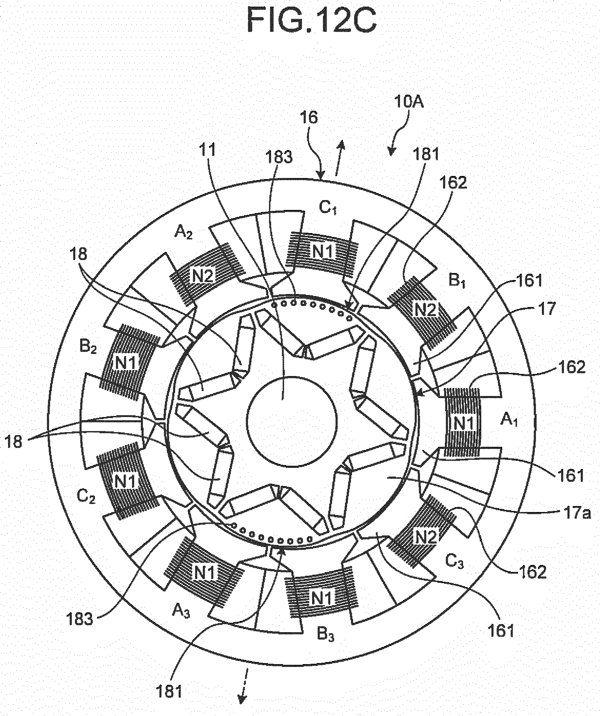

If determination is provided in such a manner that the initial electrical angle phase is the third electrical angle phase (210 to 300 degrees) (step S330: Yes), the control unit 21 moves the index magnetic pole (181, 181) to θ1 (electrical angle of 240 degrees) at step S370. For example, as illustrated in FIG. 12C, one index magnetic pole 181 is opposed to the coil 162 with N1 turns for C₁ while the other index magnetic pole 181 is positioned between the two coils 162, 162 with N1 turns for A₃ and B₃. At such positions, the measurement unit 22 applies a high-frequency signal to detect electric current amplitude (I_1).

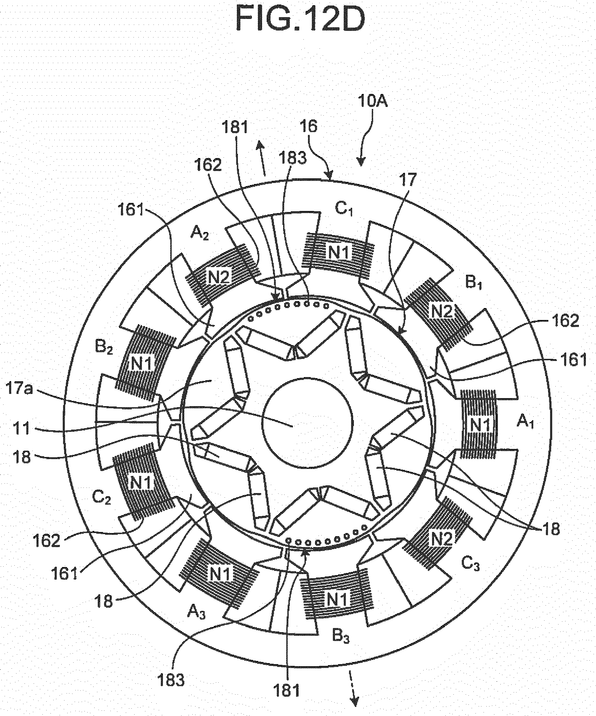

Then, the control unit 21 moves the index magnetic pole 181 to θ2 (electrical angle of 300 degrees). For example, as illustrated in FIG. 12D, one index magnetic pole 181 is positioned between the coils 162, 162 with N1 turns for C₁ and N2 turns for A₂, while the other index magnetic pole 181 is positioned to be opposed to the coil 162 with N1 turns for B₃. At such positions, the measurement unit 22 applies a high-frequency signal to detect electric current amplitude (I_2) (step S371).

Subsequently, the control unit 21 causes its process to go to step S372, and causes the mechanical angle estimation unit 24 to determine whether or not (I_2)-(I_1) is greater than I_sh.

If (I_2) - (I_1) > I_sh (step S372: Yes), base data (see FIG. 11) are referred to, and thereby, a mechanical angle θm is set at 220 degrees. That is, as FIG. 11 is referred to, an inductance difference between a position of an electrical angle of 300 degrees and a position of an electrical angle of 240 degrees has a positive slope when the index magnetic pole 181 is present at a position of a mechanical angle of 220 degrees (electrical angle of 300 degrees) (sector 4).

On the other hand, if not (I_2) - (I_1) > I_sh (step S372: No), the mechanical angle estimation unit 24 determines whether or not (I_2) - (I_1) is less than -I_sh (step S373).

If (I_2) - (I_1) < - I_sh (step S373: Yes), base data (see FIG. 11) are referred to, and thereby, a mechanical angle θm is set at 340 degrees. That is, as FIG. 11 is referred to, an inductance difference between a position of an electrical angle of 300 degrees and a position of an electrical angle of 240 degrees has a negative slope when the index magnetic pole 181 is present at a position of a mechanical angle of 340 degrees (electrical angle of 300 degrees) (sector 6).

On the other hand, if not (I_2) - (I_1) < -I_sh (step S373: No), base data (see FIG. 11) are referred to, and thereby, a mechanical angle θm is set at 100 degrees. That is, as FIG. 11 is referred to, an inductance difference between a position of an electrical angle of 300 degrees and a position of an electrical angle of 240 degrees is little or has a slope near zero, that is, an absolute value of the difference is less than I_sh, when the index magnetic pole 181 is present at a position of a mechanical angle of 100 degrees (electrical angle of 300 degrees) (sector 2). This corresponds to a case where the index magnetic poles 181, 181 are present at positions as illustrated in FIG. 12C and FIG. 12D.

If the initial electrical angle phase is the fourth electrical angle phase (300 to 390 (30) degrees) (step S340), the control unit 21 moves the index magnetic pole (181, 181) to θ1 (electrical angle of 300 degrees) at step S380. For example, as illustrated in FIG. 12D, one index magnetic pole 181 is positioned between the coils 162, 162 with N1 turns for C₁ and N2 turns for A₂ while the other index magnetic pole 181 is positioned to be opposed to the coil 162 with N1 turns for B₃. At such positions, the measurement unit 22 applies a high-frequency signal to detect electric current amplitude (I_1).

Then, the control unit 21 moves the index magnetic pole 181 to θ2 (electrical angle of 0 degrees). For example, although not illustrated in the drawing, one index magnetic pole 181 is opposed to the coil 162 with N2 turns for A₂, while the other index magnetic pole 181 is positioned between the coils 162, 162 with N1 turns for B₃ and N2 turns for C₃. At such positions, the measurement unit 22 applies a high-frequency signal to detect electric current amplitude (I_2) (step S381).

Subsequently, the control unit 21 causes its process to go to step S382, and causes the mechanical angle estimation unit 24 to determine whether or not (I_2)-(I_1) is greater than I_sh.

If (I_2) - (I_1) > I_sh (step S382: Yes), base data (see FIG. 11) are referred to, and thereby, a mechanical angle θm is set at 120 degrees. That is, as FIG. 11 is referred to, an inductance difference between a position of an electrical angle of 0 degrees and a position of an electrical angle of 300 degrees has a positive slope when the index magnetic pole 181 is present at a position of a mechanical angle of 120 degrees (electrical angle of 360 (0) degrees) (sector 2).

On the other hand, if not (I_2) - (I_1) > I_sh (step S382: No), the mechanical angle estimation unit 24 determines whether or not (I_2) - (I_1) is less than -I_sh (step S383).

If (I_2) - (I_1) < - I_sh (step S383: Yes), base data (see FIG. 11) are referred to, and thereby, a mechanical angle θm is set at 240 degrees. That is, as FIG. 11 is referred to, an inductance difference between a position of an electrical angle of 0 degrees and a position of an electrical angle of 300 degrees has a negative slope when the index magnetic pole 181 is present at a position of a mechanical angle of 240 degrees (electrical angle of 360 (0) degrees) (sector 4).

On the other hand, if not (I_2) - (I_1) < -I_sh (step S383: No), base data (see FIG. 11) are referred to, and thereby, a mechanical angle θm is set at 0 degrees. That is, as FIG. 11 is referred to, an inductance difference between a position of an electrical angle of 0 degrees and a position of an electrical angle of 300 degrees is little or has a slope near zero, that is, an absolute value of the difference is less than I_sh, when the index magnetic pole 181 is present at a position of a mechanical angle of 0 degrees (electrical angle of 360 (0) degrees) (sector 6).

A detection method of a mechanical angle of the motor 10A or 10B described above has the following steps that are executed by the control device 20.
(a) A step of preliminarily storing inductance characteristics in a case where the two index magnetic poles 181 that are provided at point-symmetric positions and are indices among a plurality of magnetic poles in the rotor 17 are present at respective slots 161 of the stator 16. (b) A step of detecting an initial electrical angle phase of the rotor 17 by utilizing magnetic saliency of the motor 10A or 10B. (c) A step of moving one of the two index magnetic poles 181 to a position of a first arbitrary phase with the initial electrical angle phase being within a range of -150 degrees to 30 degrees or 30 degrees to 210 degrees and applying a high-frequency signal to obtain a first inductance. (d) A step of moving the other index magnetic pole 181 to a position of a second arbitrary phase within the range of step (c) and applying a high-frequency signal to obtain a second inductance. (e) A step of obtaining a mechanical angle of the rotor 17 based on a difference value between the first inductance and the second inductance, and the stored inductance characteristics. A phase closest to the initial electrical angle phase can be selected for the first arbitrary phase at step (c). A phase closest to a position of 180 degrees with respect to the initial electrical angle phase can be selected for the second arbitrary phase at step (d).

According to the motor 10, 10A, or 10B, the motor systems 1, and the detection method of a mechanical angle of the motor 10, 10A, or 10B as described above, it is possible to estimate an absolute position of the rotor 17 directly.

In the detection method of a mechanical angle described above, two index magnetic poles 181 and six sectors are provided, and hence, an amount of rotation of the rotor 17 that is necessary to detect a mechanical angle can be reduced by half.

Although the present invention has been described above by means of embodiments and variations, the kind of the motor 10, 10A, or 10B, the number of poles or the number of slots of the motor 10, 10A, or 10B, or the like, can be set appropriately.

Due to the embodiments described above, the following motors are realized.
(a) The motor 10, 10A, or 10B that includes the stator 16 wherein the plurality of coils 162 are wound around the respective slots 161 for each of a plurality of phases and the number of turns of one of the plurality of coils 162 is different from those of the others for each of the phases, and the rotor 17 that is arranged opposite to the stator 16 through the predetermined air gap 19 wherein a magnetoresistance of at least one of a plurality of magnetic poles that are formed of the plurality of permanent magnets 18 arranged in a circumferential direction of the rotor core 17a is different from those of the others.
(b) The motor 10 wherein the rotor 17 is such that the groove 182 is formed on a portion of the rotor core 17a that is included in at least one of the plurality of magnetic poles.
(c) The motor 10A wherein the rotor 17 is such that a plurality of small holes are formed, in a circumferential direction, on a portion of the rotor core 17a that is included in at least one of the plurality of magnetic poles.
(d) The motor 10B wherein the rotor 17 is such that a size of the air gap 19 at a portion of the rotor core 17a that is included in a pair of opposed magnetic poles among the plurality of magnetic poles is different from those of the others.
(e) The motor 10, 10A, or 10B wherein the rotor 17 is such that one magnetic pole is formed of the permanent magnets 18, 18 arranged in a substantial V-shape.
(f) The motor 10, 10A, or 10B wherein the stator 16 is a three-phase and nine-slot stator and the rotor 17 is such that the total number of magnetic poles that face the air gap 19 is six.

The following motor system is realized by means of the embodiments described above.
(g) The motor system 1 that includes the motor 10, 10A, or 10B according to any one of (a) - (f) described above, and the control device 20 that controls the motor 10, 10A, or 10B, wherein the control device 20 includes the rotor control unit 21 that controls rotation of the rotor 17, the inductance measurement unit 22 that detects an inductance of the coil 162 of the stator 16, the storage unit 23 that stores sector information that divides the rotor 17 into sectors (for example, sectors 1, 2, and 3 in FIG. 3, or sectors 1, 2, 3, 4, 5, and 6 in FIG. 8) at a predetermined mechanical angle interval and a reference inductance for each of the sectors, and the mechanical angle estimation unit 24 that estimates a mechanical angle of the rotor 17 based on a value of the inductance measured by the inductance measurement unit 22 and the reference inductance stored in the storage unit 23.

The following detection method of a mechanical angle of a motor is realized by means of the embodiments described above.
(h) A detection method of a mechanical angle of a motor that includes the motor 10 and the control device 20 that controls the motor 10, wherein the control device 20 preliminarily stores an inductance characteristic in a case where the index magnetic pole 181 that is an index of the rotor 17 is present at each of the slots 161 of the stator 16, detects an initial electrical angle phase of the rotor 17 by utilizing a magnetic saliency of the motor 10, moves the index magnetic pole 181 to a first position that corresponds to an arbitrary first phase based on the initial electrical angle phase, and applies a high-frequency signal to the first phase to measure a first inductance, moves the index magnetic pole 181 to a second position that is adjacent to the first position and corresponds to a second phase, and applies a high-frequency signal to the second phase to measure a second inductance, further moves the index magnetic pole 181 to a third position that is different from the first position and the second position and corresponds to a third phase, and applies a high-frequency signal to the third phase to measure a third inductance, and obtains a mechanical angle of the rotor 17 based on a magnitude relation among the first to third inductances measured at the respective positions and the stored inductance characteristics.

A detection method of a mechanical angle of a motor that includes the motor 10 and the control device 20 that controls the motor 10, wherein the control device 20 preliminarily stores an inductance characteristic in a case where the index magnetic pole 181 that is an index of the rotor 17 is present at each of the slots 161 of the stator 16, detects an initial electrical angle phase of the rotor 17 by utilizing a magnetic saliency of the motor 10, moves the index magnetic pole 181 to a position of an arbitrary first phase and applies a high-frequency signal to obtain a first inductance, then moves a position of the magnetic pole to a position of a second phase adjacent to the first phase and applies a high-frequency signal to obtain a second inductance, and obtains a mechanical angle of the rotor 17 based on a difference value between the first inductance and the second inductance and the stored inductance characteristics.
(j) A detection method of a mechanical angle of a motor that includes the motor 10A or 10B according to any one of (c) to (f) described above, and the control device 20 that controls the motor 10A or 10B, wherein the rotor 17 is such that the two index magnetic poles 181, 181 that are indices, among the plurality of magnetic poles, are provided at point-symmetric positions, and the control device 20 preliminarily stores an inductance characteristic in a case where the index magnetic pole 181 is present at each of the slots 161 of the stator 16, detects an initial electrical angle phase of the rotor 17 by utilizing a magnetic saliency of the motor 10A or 10B, moves one of the two index magnetic poles 181, 181 to a position of a first arbitrary phase while the initial electrical angle phase is within a range of -150 degrees to 30 degrees or 30 degrees to 210 degrees, and applies a high-frequency signal to obtain a first inductance, moves the other index magnetic pole 181 to a position of a second arbitrary phase while the initial electrical angle phase is within a range of - 150 degrees to 30 degrees or 30 degrees to 210 degrees, and applies a high-frequency signal to obtain a second inductance, and obtains a mechanical angle of the rotor 17 based on a difference value between the first inductance and the second inductance and the stored inductance characteristics.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1: motor system

- 10: motor
- 16: stator
- 17: rotor
- 17a: rotor core
- 18: permanent magnet
- 19: air gap
- 20: control device
- 21: rotor control unit
- 22: inductance measurement unit
- 23: storage unit
- 24: mechanical angle estimation unit
- 161: slot
- 162: coil
- 181: index magnetic pole
- 182: groove
- 183: small hole

## Claims

1. A motor, comprising:
a stator in which a plurality of coils are wound around respective slots for each of a plurality of phases, a number of turns of one of the plurality of coils being different from those of others for each of the phases; and
a rotor that is arranged opposite to the stator through a predetermined air gap, among a plurality of magnetic poles formed of a plurality of permanent magnets arranged in a circumferential direction of a core, a magnetoresistance of at least one magnetic pole being different from those of others.

2. The motor according to claim 1, wherein the rotor is such that a groove is formed on a portion of the core that is included in at least one of the plurality of magnetic poles.

3. The motor according to claim 1, wherein the rotor is such that a plurality of small holes are formed along the circumferential direction on a portion of the core that is included in at least one of the plurality of magnetic poles.

4. The motor according to claim 1, wherein the rotor is such that among the plurality of magnetic poles, a size of the air gap corresponding to a portion of the core included in one of a pair of opposed magnetic poles is different from that of another.

5. The motor according to any one of claims 1 to 4, wherein the rotor is such that one magnetic pole is formed of the permanent magnets arranged in a substantial V-shape.

6. The motor according to any one of claims 1 to 4, wherein
the stator includes a three-phase and nine-slot stator, and
the rotor is such that a total number of magnetic poles that face the air gap is six.

7. The motor according to claim 5, wherein
the stator includes a three-phase and nine-slot stator, and
the rotor is such that a total number of magnetic poles that face the air gap is six.

8. A motor system, comprising:
the motor according to any one of claims 1 to 4; and
a control device that controls the motor,
the control device comprising:
a rotor control unit that controls rotation of the rotor;
an inductance measurement unit that detects an inductance of the coil of the stator;
a storage unit that stores sector information that divides the rotator into sectors at a predetermined mechanical angle interval and a reference inductance for each of the sectors; and
a mechanical angle estimation unit that estimates a mechanical angle of the rotor based on a value of the inductance measured by the inductance measurement unit and the reference inductance stored in the storage unit.

9. A motor system, comprising:
the motor according to claim 5; and
a control device that controls the motor,
the control device comprising:
a rotor control unit that controls rotation of the rotor;
an inductance measurement unit that detects an inductance of the coil of the stator;
a storage unit that stores sector information that divides the rotator into sectors at a predetermined mechanical angle interval and a reference inductance for each of the sectors; and
a mechanical angle estimation unit that estimates a mechanical angle of the rotor based on a value of the inductance measured by the inductance measurement unit and the reference inductance stored in the storage unit.

10. A motor system, comprising:
the motor according to claim 6; and
a control device that controls the motor,
the control device comprising:
a rotor control unit that controls rotation of the rotor;
an inductance measurement unit that detects an inductance of the coil of the stator;
a storage unit that stores sector information that divides the rotator into sectors at a predetermined mechanical angle interval and a reference inductance for each of the sectors; and
a mechanical angle estimation unit that estimates a mechanical angle of the rotor based on a value of the inductance measured by the inductance measurement unit and the reference inductance stored in the storage unit.

11. A detection method of a mechanical angle of a motor in a motor system,
the motor system comprising:
the motor according to any one of claims 1 to 4; and
a control device that controls the motor,
the detection method comprising:
preliminarily storing an inductance characteristic in a case where an index magnetic pole that is an index of the rotor is present at each of the slots of the stator;
detecting an initial electrical angle phase of the rotor by utilizing a magnetic saliency of the motor;
moving the index magnetic pole to a first position that corresponds to an arbitrary first phase based on the initial electrical angle phase, and applying a high-frequency signal to the first phase to measure a first inductance;
moving the index magnetic pole to a second position that is adjacent to the first position and corresponds to a second phase, and applying a high-frequency signal to the second phase to measure a second inductance;
further moving the index magnetic pole to a third position that is different from the first position and the second position and corresponds to a third phase, and applying a high-frequency signal to the third phase to measure a third inductance; and
obtaining a mechanical angle of the rotor based on a magnitude relation of the first to third inductances measured at the respective positions and the stored inductance characteristic.

12. A detection method of a mechanical angle of a motor in a motor system,
the motor system comprising:
the motor according to claim 5; and
a control device that controls the motor,
the detection method comprising:
preliminarily storing an inductance characteristic in a case where an index magnetic pole that is an index of the rotor is present at each of the slots of the stator;
detecting an initial electrical angle phase of the rotor by utilizing a magnetic saliency of the motor;
moving the index magnetic pole to a first position that corresponds to an arbitrary first phase based on the initial electrical angle phase, and applying a high-frequency signal to the first phase to measure a first inductance;
moving the index magnetic pole to a second position that is adjacent to the first position and corresponds to a second phase, and applying a high-frequency signal to the second phase to measure a second inductance;
further moving the index magnetic pole to a third position that is different from the first position and the second position and corresponds to a third phase, and applying a high-frequency signal to the third phase to measure a third inductance; and
obtaining a mechanical angle of the rotor based on a magnitude relation of the first to third inductances measured at the respective positions and the stored inductance characteristic.

13. A detection method of a mechanical angle of a motor in a motor system,
the motor system comprising:
the motor according to claim 6; and
a control device that controls the motor,
the detection method comprising:
preliminarily storing an inductance characteristic in a case where an index magnetic pole that is an index of the rotor is present at each of the slots of the stator;
detecting an initial electrical angle phase of the rotor by utilizing a magnetic saliency of the motor;
moving the index magnetic pole to a first position that corresponds to an arbitrary first phase based on the initial electrical angle phase, and applying a high-frequency signal to the first phase to measure a first inductance;
moving the index magnetic pole to a second position that is adjacent to the first position and corresponds to a second phase, and applying a high-frequency signal to the second phase to measure a second inductance;
further moving the index magnetic pole to a third position that is different from the first position and the second position and corresponds to a third phase, and applying a high-frequency signal to the third phase to measure a third inductance; and
obtaining a mechanical angle of the rotor based on a magnitude relation of the first to third inductances measured at the respective positions and the stored inductance characteristic.

14. A detection method of a mechanical angle of a motor in a motor system,
the motor system comprising:
the motor according to any one of claims 1 to 4; and
a control device that controls the motor,
the detection method comprising:
preliminarily storing an inductance characteristic in a case where an index magnetic pole that is an index of the rotor is present at each of the slots of the stator;
detecting an initial electrical angle phase of the rotor by utilizing a magnetic saliency of the motor;
moving the index magnetic pole to a position of an arbitrary first phase and applying a high-frequency signal to obtain a first inductance;
then moving a position of the magnetic pole to a position of a second phase adjacent to the first phase and applying a high-frequency signal to obtain a second inductance; and
obtaining a mechanical angle of the rotor based on a difference value between the first inductance and the second inductance and the stored inductance characteristic.

15. A detection method of a mechanical angle of a motor in a motor system,
the motor system comprising:
the motor according to claim 5; and
a control device that controls the motor,
the detection method comprising:
preliminarily storing an inductance characteristic in a case where an index magnetic pole that is an index of the rotor is present at each of the slots of the stator;
detecting an initial electrical angle phase of the rotor by utilizing a magnetic saliency of the motor;
moving the index magnetic poleto a position of an arbitrary first phase and applying a high-frequency signal to obtain a first inductance;
then moving a position of the magnetic pole to a position of a second phase adjacent to the first phase and applying a high-frequency signal to obtain a second inductance; and
obtaining a mechanical angle of the rotor based on a difference value between the first inductance and the second inductance and the stored inductance characteristic.

16. A detection method of a mechanical angle of a motor in a motor system,
the motor system comprising:
the motor according to claim 6; and
a control device that controls the motor,
the detection method comprising:
preliminarily storing an inductance characteristic in a case where an index magnetic pole that is an index of the rotor is present at each of the slots of the stator;
detecting an initial electrical angle phase of the rotor by utilizing a magnetic saliency of the motor;
moving the index magnetic pole to a position of an arbitrary first phase and applying a high-frequency signal to obtain a first inductance;
then moving a position of the magnetic pole to a position of a second phase adjacent to the first phase and applying a high-frequency signal to obtain a second inductance; and
obtaining a mechanical angle of the rotor based on a difference value between the first inductance and the second inductance and the stored inductance characteristic.

17. A detection method of a mechanical angle of a motor in a motor system,
the motor system comprising:
the motor according to claim 3 or 4; and
a control device that controls the motor,
the rotor being such that two index magnetic poles that are indices, among the plurality of magnetic poles, are provided at point-symmetric positions, and
the detection method comprising:
preliminarily storing an inductance characteristic in a case where the index magnetic poles are present at the respective slots of the stator;
detecting an initial electrical angle phase of the rotor by utilizing a magnetic saliency of the motor;
moving one of the two index magnetic poles to a position of a first arbitrary phase, with the initial electrical angle phase being within a range of -150 degrees to 30 degrees or 30 degrees to 210 degrees, and applying a high-frequency signal to obtain a first inductance;
moving another index magnetic pole to a position of a second arbitrary phase within the range, and applying a high-frequency signal to obtain a second inductance; and
obtaining a mechanical angle of the rotor based on a difference value between the first inductance and the second inductance and the stored inductance characteristic.
